# EUROPÄISCHE PATENTSCHRIFT

(11) **EP 2 143 576 B1**
(45) Veröffentlichungstag und Bekanntmachung des Hinweises auf die Patenterteilung: **28.11.2012**
(21) Anmeldenummer: 09164831.1
(22) Anmeldetag: 07.07.2009
(51) Int. Cl.: B60H 3/00, A61L 9/12

(54) **Duftmittelspender**
Fragance dispenser
Distributeur de parfum

(30) Priorität: 11.07.2008 DE 102008032612
(43) Veröffentlichungstag der Anmeldung: 13.01.2010
(73) Patentinhaber: Behr GmbH & Co. KG, 70469 Stuttgart (DE)
(72) Erfinder: Fieger, Martin, 71636 Ludwigsburg (DE); Lochmahr, Karl, 71665 Vaihingen/Enz (DE); Rais, Thomas, 71672 Marbach/Neckar (DE); Treier, Joachim, 77728 Oppenau (DE); Fritsche, Uwe, 71686 Remseck (DE); Kroner, Peter, 66482 Zweibrücken (DE); Stiehler, Daniela, 70597 Stuttgart (DE); Zeller, Kuno, 70435 Stuttgart (DE)
(74) Vertreter: Grauel, Andreas

(56) Entgegenhaltungen:
- EP-A- 1 475 108
- EP-A- 2 085 258
- WO-A-2005/120869
- WO-A-2009/003704
- WO-A-2009/016590
- US-A- 4 702 418

## Beschreibung

Die Erfindung betrifft eine Beduftungsvorrichtung mit einer Duftmittelvorratsvorrichtung, welche wenigstens eine Duftmittelbehältereinrichtung und wenigstens eine Duftmittelaustragseinrichtung aufweist, insbesondere eine Beduftungsvorrichtung für ein Fahrzeug.

Bei der Aufarbeitung von Luft erfolgt in zunehmendem Maße auch ein Einbringen von Duftstoffen in die aufzuarbeitende bzw. in die aufgearbeitete Luft. Duftstoffe werden nämlich über das Limbische System unter Umgehung des Bewusstseins wahrgenommen. Aufgrund dieser Umgehung von Denkprozessen kann mittels Duftstoffen besonders effektiv auf den Gemütszustand einer Person eingewirkt werden. Dies wird beispielsweise bei der Klimatisierung von Büros, Verkaufsstätten und Fahrzeugen, insbesondere von Luftfahrzeugen, ausgenutzt, um beispielsweise die Kauflust zu fördern, oder nervöse Passagiere zu beruhigen. Auch im Kraftfahrzeugbereich wird eine Beduftung in zunehmendem Maße eingesetzt.

Bislang werden im Kraftfahrzeugbereich zur Beduftung des Fahrzeuginnenraums oftmals Duftbäume aus Karton oder einem entsprechenden Material verwendet. Diese Duftbäume sind mit einem Duftstoff getränkt, der sukzessive an die Außenluft abgegeben wird. Die Duftbäume werden in der Regel am Fahrzeuginnenspiegel befestigt, wo sie gut erkennbar sind. Die Duftbäume werden jedoch oftmals als kitschig und störend empfunden. Darüber hinaus geben die Duftbäume den Duftstoff kontinuierlich an die Außenluft ab, so dass sich die Fahrzeuginsassen nach einiger Zeit an den Geruch gewöhnen und ihn schlussendlich nicht mehr wahrnehmen, Manche Personen bevorzugen jedoch eine dauerhaft wahmehmbare Beduftung des Fahrzeuginnenraums,

Um eine Gewöhnung an den Duftstoff zu verhindern, wurden bereits Beduftungsvorrichtungen vorgeschlagen, bei denen der Duftstoff stoßweise in Intervallen freigesetzt wird. Diese Duftstöße können grundsätzlich über einen beliebig langen Zeitraum bewusst wahrgenommen werden.

Komplexe Beduftungsvorrichtungen werden aus Kostengründen in der Regel nachfüllbar ausgeführt. Das heißt, dass ein großer Anteil der Baugruppen der Beduftungsvorrichtung dauerhaft verwendet wird. Die sich verbrauchenden Duftstoffe werden entweder mit einer Nachfülleinheit (meist eine Nachfüllspritze) nachgefüllt, oder der leere Duftmittelbehälter wird durch einen neuen Duftmittelbehälter ersetzt. Es hat sich jedoch herausgestellt, dass ein derartiges Nachfüllen einer Beduftungsvorrichtung aus hygienischen Gründen problematisch ist. Denn bei einem Nachfüllen des Duftmittels bzw. bei einem Austausch des Duftmittelbehälters können Verunreinigungen, Sporen oder Keime in das Duftmittel gelangen und sich dort ggfs. vermehren. Diese verteilen sich anschließend mit dem Duftmittel im Kraftfahrzeuginnenraum, wo sie in die Atemwege der Fahrzeuginsassen gelangen. Da die Fahrzeugpassagiere den Duftstoffen funktionsbedingt über einen langen Zeitraum ausgesetzt sind, ist dies aus medizinischer Sicht nicht unbedenklich.

Möglich ist es, den Duftstoffen eine entsprechende Menge an Konservierungsstoffen beizumischen. Jedoch können sich auch derartige Konservierungsstoffe als gesundheitlich bedenklich erweisen. Darüber hinaus lehnen viele Verbraucher Konservierungsstoffe aus grundsätzlichen Erwägungen ab. Möglich ist es auch, die Duftstoffe vor dem Verteilen (bzw. beim Verteilen) durch Erhitzen zu sterilisieren. Hier erweist sich jedoch als nachteilig, dass die Duftauthentizität der Duftstoffe beim Erhitzen oftmals leidet.

EP 1475 108 A2 offenbart eine Beduftungsvorrichtung nach dem Oberbegriff von Anspruch 1.

Die Aufgabe der Erfindung liegt somit darin, eine verbesserte Beduftungsvorrichtung vorzuschlagen.

Die Aufgabe wird gelöst durch eine Beduftungsvorrichtungnach Anspruch 1.

Dazu wird vorgeschlagen, eine Duftmittelvorratsvorrichtung, welche wenigstens eine Duftmittelbehältereinrichtung und wenigstens eine Duftmittelaustragseinrichtung aufweist, mit wenigstens einer Koppelungseinrichtung zur Ankopplung an wenigstens eine Aktuatoreinrichtung zu versehen. Die Duftmittelvorratsvorrichtung ist als austauschbare Einheit aus Duftmittelbehältereinrichtung, Duftmittelaustragseinrichtung und Koppelungseinrichtung ausgebildet. Wenn also beispielsweise das Duftmittel einer Beduftungsvorrichtung erschöpft ist, so kann die gesamte Duftmittelvorratsvorrichtung ausgetauscht werden. Dadurch kann insbesondere eine Kontamination des Duftmittels beim Nachfüllen von Duftmittel verhindert werden, oder zumindest stark verringert werden. Dadurch, dass lediglich eine Koppelungseinrichtung zur Ankopplung der Duftmittelvorratsvorrichtung an wenigstens eine Aktuatorvorrichtung vorgesehen werden kann, steigt der bauliche Aufwand der Duftmittelvorratsvorrichtung üblicherweise nicht übermäßig an. Üblicherweise ist nämlich gerade die Aktuatoreinrichtung relativ komplex und aufwändig. Diese ist jedoch unabhängig von der Duftmittelvorratsvorrichtung vorgesehen, so dass diese nicht mitsamt der Duftmittelvorratsvorrichtung ausgetauscht werden muss und daher dauerhaft verwendet werden kann. Auch die Duftmittelaustragseinrichtung kann üblicherweise einfach ausgebildet werden, so dass auch hier die Kosten bei einem Austausch der gesamten Duftmittelvorratsvorrichtung nicht übermäßig ansteigen müssen.

Zusätzlich wird vorgeschlagen, die Duftmittelvorratsvorrichtung mit zumindest einem Informationsspeichermittel zu versehen, welches insbesondere als elektronisches Informationsspeichermittel ausgebildet ist. Bei den gespeicherten Informationen kann es sich beispielsweise um die Art des Duftstoffs, um die Füllmenge, um das Herstellungsdatum, um das Verfallsdatum, um eine Chargennummer, um die Duftintensität des Duftmittels, um eine sonstige Stoffcharakteristik des Duftmittels, um sonstige Produktinformationen, um den Hersteller und/oder um Dosierungshinweise handeln. Als Informationsspeichermittel können zum Beispiel einfache Papieretiketten, aber auch beispielsweise elektronische Chips oder sonstige elektronische, magnetische und/oder optische Speichermedien eingesetzt werden. Insbesondere ist es auch möglich, dass die im Informationsspeichermittel gespeicherten Informationen während des Betriebs der Duftmittelvorratsvorrichtung bzw, während des Betriebs der Beduftungsvorrichtung, in die die Duftmittelvorratsvorrichtung eingesetzt ist, geändert werden, Hierbei kann es sich insbesondere um einen Befüllungszustand der Duftmittelbehältereinrichtung, um die Anzahl der Betriebsstunden, um ein Einsatzprofil, um die Einsatzhistorie und/oder um einen Einsatzort (z.B. basierend auf Daten, die von einem Navigationssystem zur Verfügung gestellt werden) handeln. Die Informationen können derart angezeigt werden, dass sie von einem Menschen direkt gelesen werden können. Dies ist beispielsweise der Fall, wenn es sich bei dem Informationsspeichermittel um ein einfaches Papieretikett handelt. Zur Erkennung des Füllstands ist es auch möglich, die Duftmittelbehältereinrichtung mit einem Fenster zu versehen und/oder zumindest teilweise aus einem transparenten bzw. durchsichtigen Material zu fertigen. Die Diagnose des Füllstands kann dann beispielsweise optoelektronisch erfolgen. Es kann sich jedoch auch als sinnvoll erweisen, wenn die Informationen von einem entsprechenden Informationsübertragungsmittel ausgelesen werden, und die von dem Informationsübertragungsmittel ausgelesenen Informationen für eine automatische Steuerung genutzt werden bzw. von dem Informationsübertragungsmittel mittelbar an eine Person weitergeleitet werden. Bevorzugt handelt es sich bei dem Informationsübertragungsmittel um ein elektronisches Informationsübertragungsmittel. Ein derartiges mechanisiertes Auslesen bzw. Übertragen von Informationen kann beispielsweise durch eine optische Kamera, einen Barcode, einen 2-D Code, einen RFID-Chip (RFID für Radio Frequency IDentification), durch eine Bluetooth-Übertragung oder durch kontaktbehaftete elektrische Signale erfolgen. Insbesondere ist es auch denkbar, dass eine Informationsübertragung nicht nur unidirektional, sondern insbesondere auch bidirektional erfolgt. Z.B. können auf diese Weise Ortskoordinaten eines Navigationssystems an die Duftmittelvorratsvorrichtung übertragen werden, Die auf dem Informationsspeichermittel gespeicherten Informationen können auch - zumindest teilweise - in verschlüsselter Form gespeichert sein. Dadurch ist es besonders gut möglich, die Produktauthentizität sicherzustellen und Fälschungen zu erschweren. Darüber hinaus ist es auch möglich, gewisse Informationen zu speichern, die vom Benutzer nicht aktiv gelesen und/oder verändert werden können sollen. Beispielsweise kann das Benutzerverhalten (Anzahl der Eingriffe, Öffnen der Beduftungsvorrichtung, Zahl der Einschaltvorgänge, Betriebsstunden usw.) gespeichert werden, um nötigenfalls bei einem Garantiefall ausgelesen und verwendet werden zu können.

Es kann sich als vorteilhaft erweisen, wenn die Koppelungseinrichtung zumindest teilweise als elektrische Koppelungseinrichtung und/oder zumindest teilweise als Wärmekoppelungseinrichtung ausgeführt ist. Mit Hilfe derartiger Koppelungseinrichtungen kann die Betätigung der Duftmittelvorratsvorrichtung (insbesondere der Duftmittelaustragseinrichtung) auf besonders einfache, verschleißarme, kostengünstige und/oder beschädigungsunempfindliche (insbesondere beim Austausch der Duftmittelvorratsvorrichtung) Weise ausgeführt werden. Eine elektrische Koppelungseinrichtung kann beispielsweise als elektrischer Stecker, bzw. als elektrische Buchse ausgeführt werden. Möglich ist es auch, den elektrischen Kontakt beispielsweise mittels einer elektrisch leitenden Fläche, die von einem federbelasteten Stift kontaktiert wird, auszuführen. Eine Wärmekoppelungseinrichtung kann insbesondere unter Benutzung von zwei, jeweils gut wärmeleitenden Materialien, die einander möglichst flächig berühren, ausgebildet werden. Hier kann die Wärmekoppelung durch Wärmeleitung erfolgen. Möglich ist es aber auch, zumindest teilweise eine Wärmeübertragung durch Konvektion vorzusehen, was beispielsweise durch sogenannte Heat-Pipes erfolgen kann.

Die Duftmittelvorratsvorrichtung ist keimdicht ausgeführt. Auf diese Weise kann ein problematisches Verkeimen des Duftmittels vermieden werden. Dies ist aus gesundheitlichen Erwägungen im Verhältnis zu Nachfüllsystemen, bei dem es zu einem Verkeimen des Duftmittels kommen kann, vorzuziehen.

Es ist möglich, die Duftmittelvorratsvorrichtung, insbesondere die Duftmittelbehältereinrichtung und/oder die Duftmittelaustragseinrichtung zumindest teilweise wieder befüllbar und/oder zumindest teilweise rezyklierbar auszuführen. In diesem Zusammenhang ist insbesondere an eine Wiederbefüllung bzw. eine Rezyklierung beim Hersteller der Duftmittelvorratsvorrichtung, bzw. bei einem Servicepartner des Herstellers der Duftmittelvorratsvorrichtung zu denken. Dort ist es nämlich möglich, die Wiederbefüllung der Duftmittelvorratsvorrichtung unter sterilen Bedingungen durchzuführen. Dadurch können einerseits Kosten gespart werden, andererseits kann eine aus hygienischer Sicht unbedenkliche Beduftungsvorrichtung ermöglicht werden. Die Duftmittelvorratsvorrichtung kann dann beispielsweise als bepfandetes Bauteil in Umlauf gebracht werden.

Möglich ist es, dass die Duftmittelaustragseinrichtung zumindest eine Zerstäubereinrichtung, zumindest eine piezoelektrische Einrichtung und/oder zumindest eine Temperaturerhöhungseinrichtung aufweist. Derartige Baugruppen haben sich für eine Förderung sowie eine Zerstäubung von Flüssigkeiten bewährt und sind darüber hinaus in der Regel kostengünstig verfügbar. Bei einer Zerstäubereinrichtung kann es sich um eine Art Zerstäubungsdüse handeln. Um eine Flüssigkeit mit einer derartigen Zerstäubungsdüse zerstäuben zu können, muss die Flüssigkeit üblicherweise mit einem erhöhten Druck zugeführt werden. Ein derartiger erhöhter Druck kann beispielsweise mit Hilfe einer piezoelektrischen Einrichtung und/oder einer Temperaturerhöhungseinrichtung realisiert werden. Bei einer piezoelektrischen Einrichtung wird aufgrund des piezoelektrischen Effekts beispielsweise in einem Piezokristall die angelegte elektrische Spannung direkt in eine mechanische Verformung des Piezokristalls umgewandelt. Diese Umwandlung von elektrischer in mechanische Energie erfolgt sehr effektiv, schnell und es können sehr hohe Drücke erzeugt werden.

Mit Hilfe dieser mechanischen Verformung ist es möglich, das Duftmittel zu pumpen und dadurch aus der Duftmittelbehältereinrichtung auszutragen. Eine derartige piezoelektrische Einrichtung kann dabei in der Regel derart konstruiert werden, dass bei der Förderung des Duftmittels sehr kleine Duftmitteltröpfchen ausgetragen werden, und dadurch die piezoelektrische Einrichtung zumindest teilweise die Aufgabe einer Zerstäubereinrichtung mit übernehmen kann. Mit Hilfe einer Temperaturerhöhungseinrichtung kann beispielsweise durch eine lokale Temperaturerhöhung des Duftmittels eine Volumenvergrößerung des Duftmittels erreicht werden (temperaturbedingte Volumenausdehnung und/oder teilweise Verdampfung). In Kombination mit einem durch Ventile abgeteilten Pumpraum kann mittels einer derartigen Temperaturerhöhungseinrichtung ebenfalls ein sehr effektiver Pumpmechanismus realisiert werden. Natürlich sollte die Wärmekapazität der Temperaturerhöhungseinrichtung hinreichend klein gewählt werden, damit eine schnelle Pumpantwort und eine ausreichende Förderkapazität erzielt werden kann. Da bei einer derartigen Temperaturerhöhungseinrichtung gegebenenfalls nur ein kleiner Teil des Duftmittels erhitzt wird und/oder nur eine sehr kurzzeitige Erhitzung des Duftmittels erfolgt, kann meist auch die Duftauthentizität des ausgetragenen Duftmittels gewahrt bleiben. Besonders vorteilhaft ist es, wenn die Duftmittelaustragseinrichtung Tröpfchen mit einer Größe von 3 bis 12 Mikrometer, insbesondere im Bereich von 5 Mikrometer austrägt. Im Zusammenhang mit einer Duftmittelaustragvorrichtung kann gegebenenfalls auch eine Prallplatte für die ausgetragene Flüssigkeit bzw. den ausgetragenen Flüssigkeitsnebel vorgesehen werden, um eine nochmals gleichmäßigere Vermischung von Luft und Duftmittel zu realisieren. Da die Prallplatte in der Regel mit ausgetragenen Flüssigkeitströpfchen in Kontakt kommt, ist es aus hygienischen Gründen sinnvoll, wenn die Prallplatte ebenfalls mitsamt der Duftmittelbehältervorrichtung ausgetauscht wird.

Für einen elektrisch betriebenen Zerstäuber, insbesondere dem oben genannten Piezozerstäuber ist die Ansteuerspannung vorteilhafterweise in Abhängigkeit von den Duftstoffeigenschaften, wie beispielsweise der Viskosität bzw. Oberflächenspannung einstellbar um einen vorbestimmten Duftaustrag zu gewährleisten. Insbesondere ist über die Ansteuerspannung die Intensität des Duftaustrags einstellbar. Bevorzugt erfolgt die Ansteuerung der piezoelektrischen Einrichtung mittels eines einer frequenz- oder amplitudenmodulierten Ansteuerspannung um einen genau definierten Duftaustrag zu erzielen.

Typischerweise erwärmt sich ein Piezozerstäuber beim Betrieb. Um gegebenenfalls unterstützend zur Vedampfung des Duftstoffes beizutragen, lässt sich über die oben beschriebenen Möglichkeiten zur Variation der Steuerspannung in Form der Variation der Ansteuerfrequenz, einer Frequenzmodulation, einer Amplitudenmodulation oder der Höhe der Spannung auch die Erwärmung des Piezozerstäubers gezielt steuern.

Die Beduftungs vorrichtung weist ein Verrastmittel zur Verrastung der Duftmittelvorratsvorrichtung in einem Aufnahmebereich auf. Die Duftmittelvorratsvorrichtung weist eine Führungsnut, einen vorspringenden Stift und/oder ein Federmittel für ein sogenanntes Push-Push-System auf. Die Duftmittelvorratsvorrichtung kann dann durch einfaches Eindrücken in ihrem dafür vorgesehenen Aufnahmebereich verrastet werden, und durch nochmaliges Drücken wieder entriegelt werden, um anschließend wieder aus dem Aufnahmebereich entnommen werden zu können. Derartige Push-Push-Systeme sind insbesondere von Kugelschreibern her bekannt.

Möglich ist es auch, die Duftmittelvorratsvorrichtung mit wenigstens einer Tropfenauffangeinrichtung zu versehen. Insbesondere bei dem/den vorliegend vorgeschlagenen Förderverfahren für das Duftmittel ist es möglich, dass ein Teil der Duftmitteltropfen eine derart hohe Geschwindigkeit erreicht, dass ein Teil der Duftmitteltropfen auf eine der Duftmittelaustragsöffnung gegenüberliegende Kanalwand auftrifft. Hier kann es zu einer Fluidansammlung kommen. Mit Hilfe einer Tropfenauffangeinrichtung, die beispielsweise schalenartig ausgeführt ist, kann verhindert werden, dass Duftmitteltropfen entlang der Kanalwand kriechen können und gegebenenfalls auf diesem Weg die Beduftungsvorrichtung verlassen können. Sinnvoll kann es auch sein, in diesem Bereich ein flüssigkeitsspeicherndes Material, wie beispielsweise ein Vliesmaterial anzuordnen. Es ist in diesem Zusammenhang darauf hinzuweisen, dass das in der Tropfenauffangeinrichtung aufgefangene Duftmittel mit der Zeit verdunstet, so dass die Wahrscheinlichkeit für ein "Überlaufen" der Tropfenauffangeinrichtung gering ist. Sinnvoll ist es auch, wenn die Tropfenauffangeinrichtung integral mit der Duftmittelvorratsvorrichtung ausgebildet ist, um die Möglichkeit einer Verkeimung von Duftmittel durch regelmäßigen Wechsel der Tropfenfangeinrichtung weiter zu verringern.

Die Beduftungsvorrichtung ist dabei insbesondere als Beduftungsvorrichtung für ein Fahrzeug, vorzugsweise als Beduftungsvorrichtung für ein Kraftfahrzeug ausgebildet. Die Duftmittelvorratsvorrichtung der Beduftungsvorrichtung ist austauschbar ausgeführt. Bei dem Fahrzeug (Kraftfahrzeug) kann es sich sowohl um ein Wasserfahrzeug, ein Luftfahrzeug, als auch um ein Landfahrzeug (schienengebunden/nichtschienengebunden) handeln.

Zusätzlich wird vorgeschlagen, die Beduftungsvorrichtung mit wenigstens einem Informationsübertragungsmittel zu versehen. Mit Hilfe eines derartigen Informationsübertragungsmittels kann beispielsweise die in einem Informationsspeichermittel gespeicherte Information automatisiert ausgelesen werden. Die derart gewonnene Information kann anschließend von der Beduftungsvorrichtung für die Beduftung des Fahrzeuginnenraums benutzt werden, bzw. an einen Fahrzeuginsassen weitergegeben werden. Das Informationsübertragungsmittel ist dabei bevorzugt als elektronisches Informationsübertragungsmittel ausgebildet. Das Informationsübertragungsmittel kann beispielsweise eine optische Kamera, einen Barcodescanner, einen 2-D Code-Scanner, eine RFID-Übertragungsstrecke, eine Bluetooth-Übertragungsvorrichtung und/oder eine kontaktbehaftete elektrische Signal-übertragungseinrichtung aufweisen, Insbesondere ist es auch denkbar, dass eine Informationsübertragung nicht nur unidirektional, sondern insbesondere auch bidirektional erfolgt. Die übertragenen Informationen, bzw. Informationen, welche auf den übertragenen Informationen basieren, können dem Benutzer der Vorrichtung über ein beliebiges Informationsdarstellungsmittel, wie beispielsweise über ein Display, über Anzeigeleuchtmittel, über eine akustische Rückmeldung usw. dargestellt werden. Möglich ist es im Übrigen auch, dass die Datenübertragung des Informationsübertragungsmittels zumindest teilweise und/oder zumindest zeitweise verschlüsselt erfolgt. Auch dadurch kann die Produktsicherheit bzw. die Sicherheit gegenüber unzulässigen Manipulationen nochmals gesteigert werden.

Die Beduftungsvorrichtung ist mit wenigstens einem Aufnahmeraum zur Aufnahme der Duftmittelvorratsvorrichtung versehen. Dies kann auf unterschiedliche Weise geschehen. Insbesondere können die Aufnahmeräume als eine Art Schublade ausgeführt werden, in die die Duftmittelvorratsvorrichtung(en) eingelegt werden kann (können).

Insbesondere ist es möglich, die Beduftungsvorrichtung mit wenigstens einer Luftbeeinfiussungsvorrichtung zu versehen, insbesondere mit wenigstens einer Luftfördereinrichtung, wenigstens einer Lufttemperaturänderungseinrichtung und/oder wenigstens einer Luftverwirbelungseinrichtung. Bei der Luftfördereinrichtung kann es sich beispielsweise um einen Ventilator bzw. ein Gebläse handeln. Dadurch können ein variabler Luftdurchsatz, und damit eine speziellen Benutzervorgaben genügende Beduftung des Fahrzeuginnenraums erfolgen, Weiterhin kann eine Lufttemperaturänderungseinrichtung, wie beispielsweise ein Heizelement oder ein Kühlelement (beispielsweise ein Wärmetauscher) vorgesehen werden. Durch derartige Vorrichtungen kann die aus der Beduftungsvorrichtung austretende Luft auf das gleiche Temperaturniveau gebracht werden, wie es im Fahrzeuginneren vorherrscht. Darüber hinaus ist es möglich, dass beispielsweise durch ein Erwärmen der Luft die Intensität des Dufts gesteigert bzw. vergleichmäßigt (Duftauthentizität) wird. Bei einer Luftverwirbelungseinrichtung kann es sich um Luftleitelemente, Prallplatten oder ähnliche Vorrichtungen handeln, Mit Hilfe einer derartigen Luftverwirbelung kann eine besonders gleichmäßige Verteilung des Duftstoffs im Luftstrom nochmals gefördert werden.

Es kann sich als vorteilhaft erweisen, wenn die Aktuatorvorrichtung zumindest teilweise als elektrische Koppelungseinrichtung, zumindest teilweise als Wärmekoppelungeinrichtung und/oder zumindest teilweise als Stoßstromeinrichtung ausgebildet ist. Mit Hilfe einer geeigneten, zu der Duftmittelaustragseinrichtung der Duftmittelvorratsvorrichtung korrespondierend ausgebildeten Aktuatoreinrichtung, kann die Beduftungsvorrichtung beispielsweise einen gesteuerten, variablen, stoßweisen und/oder intervallartigen Duftmittelaustrag erzeugen. Mit Hilfe einer Stoßstromeinrichtung ist es beispielsweise möglich, eine in einer Duftmittelvorratsvorrichtung vorgesehene Temperaturerhöhungseinrichtung schnell und effektiv auf elektrischem Wege zu erhitzen. Die Zeiträume, die zwischen zwei Duftstößen liegen, können beispielsweise zwischen 1 und 2 Minuten liegen, Die Länge der einzelnen Duftstöße beträgt vorzugsweise zwischen 0,1 und 10 Sekunden. Es kann vorgesehen werden, dass die Länge der Zeitdauern zwischen einzelnen Duftstößen und/oder die Länge der einzelnen Duftstöße vom Benutzer eingestellt werden kann. Dies kann einerseits völlig frei, aber auch mittels fest vorgegebener Stufungen realisiert werden, die vom Benutzer ausgewählt werden können. Dafür können geeignete Bedienelemente vorgesehen werden. Zusätzlich oder alternativ kann vorteilhaft auch die Intensität der Duftstöße variiert werden, beispielsweise durch höhere Abgabemengen pro Duftstoß.

Möglich ist es auch, dass die Beduftungsvorrichtung mit einer Mehrzahl von Aufnahmeräumen zur Aufnahme von Duftmittelvorratsvorrichtungen ausgebildet wird. Vorzugsweise sind aus Platzgründen nicht mehr als fünf Aufnahmeräume zur Aufnahme von Duftmittelvorratsvorrichtungen vorgesehen. Eine sinnvolle Anzahl kann sich aber auch mit zwei, drei und/oder vier verschiedenen Aufnahmeräumen ergeben. Vorzugsweise ist das System so aufgebaut, dass vom Benutzer immer nur ein einzelner Duft angewählt werden kann. Dazu können geeignete Bedienelemente vorgesehen werden. Sofern die in die Aufnahmeräume eingelegten Duftmittelvorratsvorrichtungen Grundduftrichtungen enthalten, kann es aber auch ermöglicht werden, zwei oder mehrere Düfte gleichzeitig auszuwählen, um so eine Vielzahl von Duftkompositionen zu ermöglichen. Eine derartige Mischstellung kann beispielsweise dann freigegeben werden, wenn das Informationsübertragungsmittel festgestellt hat, dass sich in den Duftmittelvorratsvorrichtungen Duftmittel mit Grundduftrichtungen befinden, die sinnvoll miteinander vermischt werden können.

Vorzugsweise ist die Beduftungsvorrichtung im Bereich eines Armaturenbretts eines Fahrzeugs angeordnet, insbesondere bevorzugt benachbart einem Luftausströmer. Beim Luftausströmer kann es sich beispielsweise um die Mitteldüse handeln, so dass der Duftstoff zentral im Frontbereich des Fahrzeugs in den Fahrzeuginnenraum gelangt und sich von dort aus verteilt. Insbesondere bevorzugt ist die Beduftungsvorrichtung mit dem zum Luftausströmer führenden Luftkanal oder einem separaten Luftkanal welcher von einer Heizungs- oder Klimaanlage abzweigt verbunden, so dass Luft vom Luftkanal direkt in die Beduftungsvorrichtung einströmen kann und hier mit dem entsprechenden Duftstoff versetzt werden kann, bevor sie die Beduftungsvorrichtung über die Austrittsöffnung wieder verlässt, Eine gesonderte Luftfördereinrichtung kann dann gegebenenfalls entfallen, da die Luftförderung durch die Luftfördereinrichtung, wie beispielsweise dem Radialgebläse der Heizung- oder Klimaanlage erfolgen kann.

Im Folgenden wird die Erfindung unter Verwendung einzelner ausgewählter Ausführungsbeispiele und unter Verweis auf die beigefügten Figuren näher beschrieben. Es zeigen:

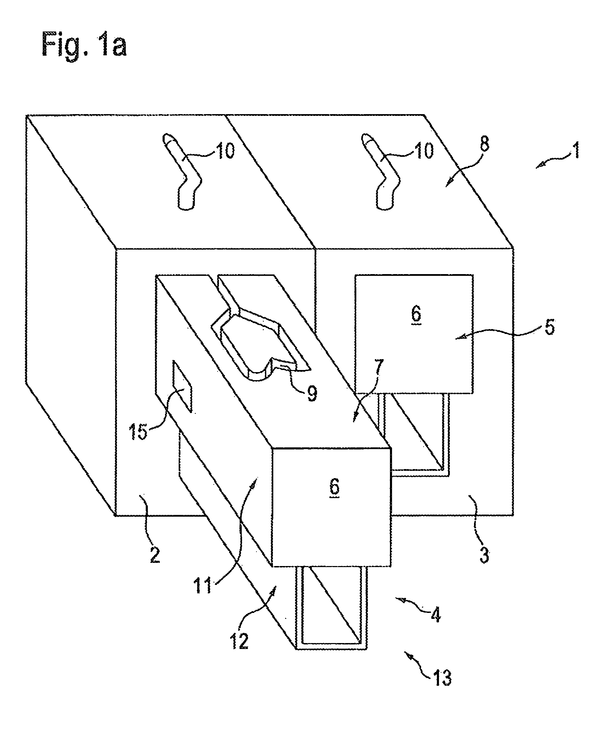

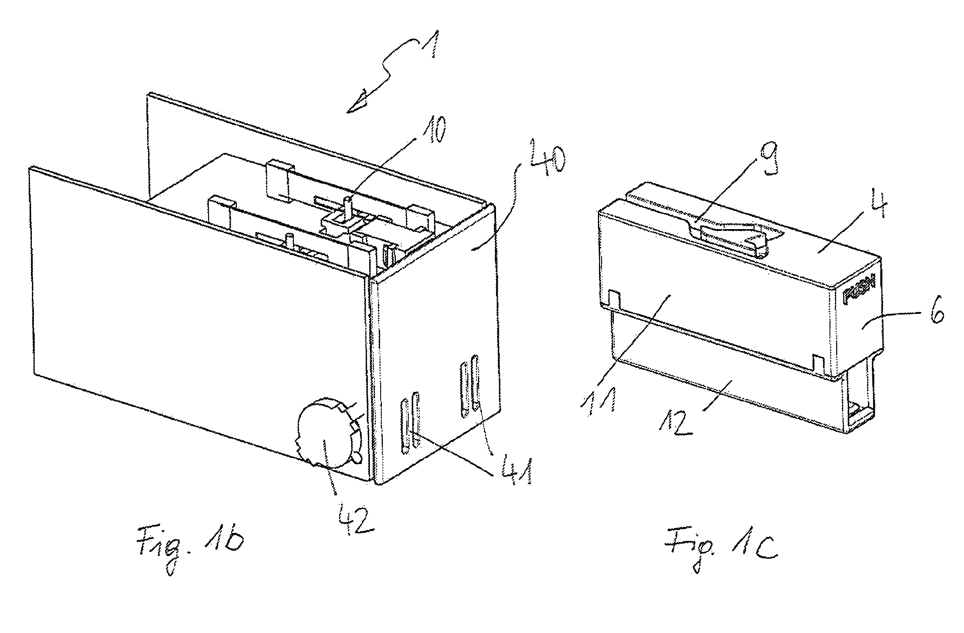

- Fig. 1 a:: Ein Ausführungsbeispiel einer Beduftungsvorrichtung mit zwei Duftmittelkartuschen in schematischer, perspektivischer Ansicht;
- Fig. 1 b:: das in Fig. 1a dargestellte Ausführungsbeispiel mit einer Frontplatte in schematischer, perspektivischer Ansicht;
- Fig. 1c:: eine Duftmittelkartusche gemäß dem in Fig. 1a dargestellten Ausführungsbeispiel schematischer, perspektivischer Ansicht;
- Fig. 2:: einen schematischen Querschnitt durch das in Fig. 1 dargestellte Ausführungsbeispiel;
- Fig. 3:: einen schematischen Querschnitt durch einen Piezoaktuator;
- Fig. 4:: einen schematischen Querschnitt durch einen Heizelementaktuator.

Fig. 1a zeigt in einer schematischen, perspektivischen Ansicht ein Ausführungsbeispiel für eine Beduftungsvorrichtung 1, welche beispielsweise zur Beduftung eines Kraftfahrzeuginnenraums verwendet werden kann. Von der Vorderseite 13 der Beduftungsvorrichtung 1 aus sind zwei Aufnahmeräume 2, 3 zugänglich, die der Aufnahme von Duftmittetkartuschen 4, 5 dienen.

In Fig. 1a ist eine erste Duftmittelkartusche 4 in einer Position dargestellt, von der aus sie in den linken Aufnahmeraum 2 der Beduftungsvorrichtung 1 eingeschoben werden kann. Die zweite Duftmittelkartusche 5 ist dagegen vollständig in den rechten Aufnahmeraum 3 der Beduftungsvorrichtung 1 eingeschoben, und in dieser Position arretiert.

Die Verrastung der Duftmittelkartuschen 4, 5 im jeweiligen Aufnahmeraum 2, 3 erfolgt mittels einer sogenannten Push-Push-Verrastung, Das heißt, die entsprechende Duftmitteikartusche 4, 5 wird durch einen Druck auf die Vorderseite 6 der Duftmittelkartusche 4, 5 in die Verrastposition eingerastet, und durch einen abermaligen Druck auf die Vorderseite 6 der Duftmittelkartusche 4, 5 wieder aus der Verrastposition gelöst. Derartige Push-Push-Verrastungen sind beispielsweise von Kugelschreibern her bekannt. Im vorliegend dargestellten Ausführungsbeispiel ist auf der Oberseite 7 der Duftmittelkartusche 4 eine geeignete Kurvenbahn 9 ausgebildet. In diese Kurvenbahn 9 der Duftmitteikartusche 4 greift ein seitlich verlagerbarer Stift 10 ein. Die seitlich verlagerbaren Stifte 10 sind auf der Oberseite 8 der Beduftungsvorrichtung 1 zu erkennen.

Die Duftmittelkartuschen 4, 5 gliedern sich in einen oben liegenden Tankbereich 11, in dem das für die Beduftung verwendete Duftmittel vorgesehen ist, wie beispielsweise in Fig. 1c genauer dargestellt. In einem unterem Bereich der Duftmittelkartusche 4, 5 ist ein Luftkanalbereich 12 zu erkennen. Bei einem Betrieb der Beduftungsvorrichtung 1 tritt die von der jeweiligen Duftmitteikartusche 4, 5 beduftete Luft auf der Vorderseite 6 des Luftkanals 12 aus.

Die in Fig. 1a dargestellte Beduftungsvorrichtung 1 weist insgesamt zwei Duftmittelkartuschen 4, 5 auf. Selbstverständlich ist es auch möglich, die Beduftungsvorrichtung 1 mit lediglich einer Duftmittelkartusche oder aber auch mit einer Mehrzahl von Duftmittelkartuschen, wie insbesondere drei, vier oder fünf Duftmittelkartuschen zu versehen. Eine größere Anzahl als fünf Duftmittelkartuschen ist üblicherweise aus Platzgründen nicht wünschenswert, Die Beduftungsvorrichtung 1 ist so ausgebildet, dass immer nur eine Beduftungskartusche 4, 5 aktiv ist. Die Duftmittelauswahl erfolgt entsprechend einer Benutzereingabe. Dazu werden geeignete Bedienelemente vorgesehen. Neben der Auswahl des Duftmittels (durch Anwahl einer entsprechenden Beduftungskartusche 4, 5), kann der Benutzer auch die Beduftungsstärke (Menge an abgegebenem Beduftungsmittel), die Luftdurchsatzmenge durch die Beduftungsvorrichtung 1 und die Intervalllängen des Beduftungsintervalls beziehungsweise des zwischen zwei Beduftungszyklen liegenden Zeitintervalls auswählen.

In Fig. 1b ist die Beduftungsvorrichtung nach Fig. 1a mit einer geschlossenen Frontplatte 40 dargestellt, wobei an deren unterem Ende Öffnungsschlitze 41 vorgesehen sind, an welchen Luft, die entsprechend mit Duftstoff kontaminiert ist austritt. Zum einfachen Austausch der Duftmittelkartuschen 4, 5 ist die Frontplatte 40 schwenkbar um eine Drehachse 42 angeordnet.

Sofern sich in den Duftmittelkartuschen 4, 5 Grunddüfte befinden, wird über eine entsprechende Logik für den Benutzer auch eine Schaltstellung freigeschaltet, bei der mehrere Duftkartuschen 4, 5 gleichzeitig angesteuert werden können. Um diese Funktionalität zu ermöglichen, ist in den Duftmittelkartuschen 4, 5 jeweils ein RFID-Chip (RFID für Radio Frequency Identification) vorgesehen, in dem Informationen über das in der Kartusche 4, 5 enthaltene Duftmittel gespeichert sind. Die im RFID-Chip 15 gespeicherte Information kann auf drahtlosem Wege ausgelesen werden. Hierzu kann eine Leseschleife genutzt werden. Zusätzlich können im RFID-Chip 15 auch weitere Informationen, wie beispielsweise das Herstelldatum, das Verfallsdatum, der aktuelle Befüllungsgrad usw. gespeichert sein.

Die von der Leseschleife aus dem RFID-Chip 15 ausgelesenen Informationen werden an eine elektronische Steuervorrichtung weitergegeben. Diese nutzt die gewonnenen Informationen beispielsweise für die Ansteuerung der Beduftungsvorrichtung 1. Darüber hinaus kann auch der Benutzer über ein Display über den Befüllungsstand des Duftmitteltanks 17 informiert werden und gegebenenfalls gesondert auf einen in Kürze erforderlich werdenden Tausch der Duftmittelkartusche 4, 5 hingewiesen werden.

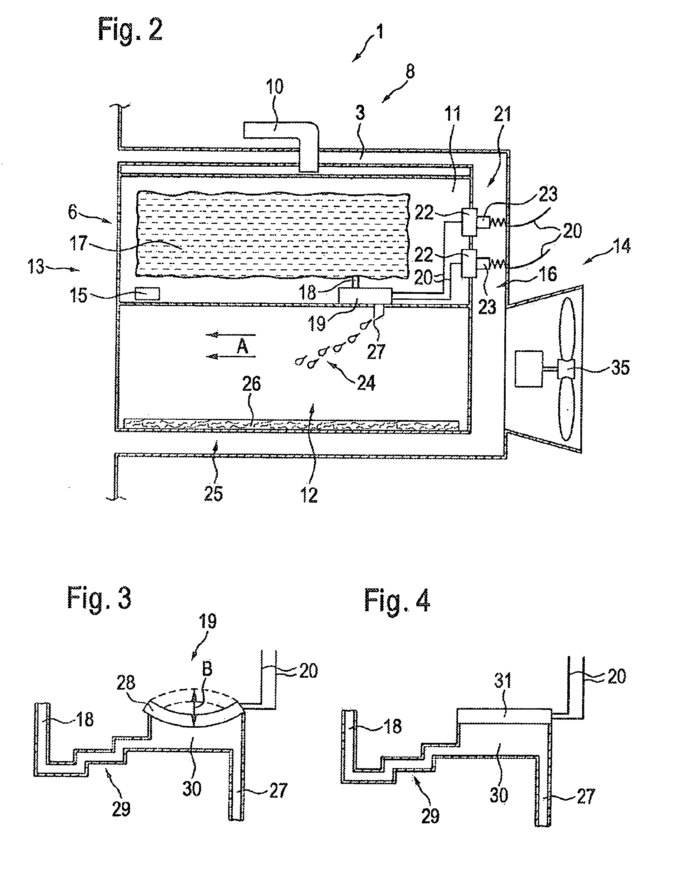

In Fig. 2 ist in einem schematischen Querschnitt die zweite Duftmittelkartusche 5, die in dem rechten Aufnahmeraum 3 der Beduftungsvorrichtung 1 eingeschoben ist, dargestellt. Dabei stellt die in Fig. 2 linke Seite die Vorderseite 6, 13 der Beduftungsvorrichtung 1 beziehungsweise der Duftmittelkartusche 5 dar. Die in Fig. 2 rechte Seite stellt dementsprechend die Rückseite 14, 16 der Beduftungsvorrichtung 1 beziehungsweise der Duftmittelkartusche 5 dar. Die erste Duftmittelkartusche 4 und die zweite Duftmittelkartusche 5 weisen üblicherweise den gleichen Aufbau auf.

Im in Fig. 2 dargestellten schematischen Querschnitt ist gut zu erkennen, wie im Tankbereich 11 der Duftmittelkartusche 5 ein Duftmitteltank 17, der mit dem Duftmittel versehen ist, vorgesehen ist, Der Duftmitteltank 17 besteht beispielsweise aus einer flexiblen Folie, sodass sich das Volumen des Duftmitteltanks 17 bei einer Entnahme von Duftmittel entsprechend der entnommen Menge verkleinern kann. Der Duftmitteltank 17 steht über eine Duftmittelleitung 18 mit einer Piezopumpe 19 in Verbindung. Die Piezopumpe 19 wird über elektrische Leitungen 20 und eine elektrische Kontaktanordnung 21 mit elektrischer Energie versorgt. Die elektrische Kontaktanordnung umfasst zwei Kontaktflächen 22, die an der Rückseite 16 der Duftmittelkartusche 5 vorgesehen sind. Die elektrischen Kontaktflächen 22 werden mit Hilfe von federbelasteten elektrischen Kontaktstiften 23 kontaktiert, die an der Rückseite 14 des Aufnahmeraums 3 der Beduftungsvorrichtung 1 vorgesehen sind. Die elektrischen Kontaktstifte 23 sind ihrerseits mit elektrischen Leitungen 20 verbunden, die beispielsweise zu einer elektronischen Steuervorrichtung (vorliegend nicht dargestellt) führen, die den Betrieb der Beduftungsvorrichtung 1 steuert. Die elektronische Steuervorrichtung steuert die Beduftungsvorrichtung 1, insbesondere die Duftmittelkartuschen 4,5 der Beduftungsvorrichtung 1, entsprechend der Benutzervorgaben an. Das von der Piezopumpe 19 geförderte Duftmittel tritt in Form eines feinen Tröpfchenstrahls 24 in den Luftkanalbereich 12 der Duftmittelkartusche 5 aus. Dort wird der Tröpfchenstrahl 24 vom Luftstrom A erfasst und vermischt sich mit diesem. Der Luftstrom A wird von einem an der Rückseite 14 der Beduftungsvorrichtung 1 vorgesehenen Ventilator 35 erzeugt. Auch der Ventilator 35 kann von der elektronischen Steuervorrichtung angesteuert werden.

Die Tröpfchengröße des von der Piezopumpe 19 geförderten Tröpfchenstrahls 24 ist üblicherweise so klein, dass die Tröpfchen des Tröpfchenstrahl 24 verdunstet sind, bevor sie die der Piezopumpe 19 gegenüberliegende Kanalwand 25 des Luftkanals 12 erreichen. Unter bestimmten Betriebsbedingungen kann jedoch nicht ausgeschlossen werden, dass einzelne Tröpfchen des Tröpfchenstrahls 24 die unten liegende Kanalwand 25 des Luftkanals 12 erreichen, beziehungsweise dass sich im Bereich der Auslassöffnung 27 der Piezopumpe 19 Flüssigkeitsmengen ansammeln, die schlussendlich einen Tropfen bilden, der nach unten auf die Kanalwand 25 des Luftkanals 12 tropfen kann. Um zu vermeiden, dass das Duftmittel in flüssiger Form an der Vorderseite 6 des Luftkanals 12 der Beduftungskartusche 5 austritt, ist die Kanalwand 25 mit einem hydrophilen Material, vorliegend einem Vlies 26, versehen. Duftmittel, welches gegebenenfalls in flüssiger Form auf das Vlies 26 auftrifft, wird von diesem aufgesaugt, und sukzessive in gasförmiger Form durch Verdunstung an die Luftströmung A im Luftkanal 12 abgegeben.

In Fig. 3 ist die in Fig. 2 nur angedeutete Piezopumpe 19 ausführlicher dargestellt. Die vom Duftmitteltank 17 kommende Duftmittelleitung 18 führt über eine Labyrinthstruktur 29 zu einer Pumpkammer 30. Eine Seite der Pumpkammer 30 ist von einem Piezoskristall 28 abgeschlossen. In Abhängigkeit von der über die elektrischen Leitungen 20 an den Piezoskristall 28 angelegten elektrischen Spannung biegt sich dieser unterschiedlich stark durch. Durch eine Wechselspannung kann dieser zwischen zwei Endstellungen hin und her bewegt werden, was durch die gestrichelte Linie (Phantomlinie) und den Doppelpfeil B angedeutet ist. Durch die Verformung des Piezoskristalls 28 ändert sich auch das Volumen der Pumpkammer 30. Erweitert sich das Volumen der Pumpkammer 30 wird über die Duftmittelleitung 18 und die Labyrinthstruktur 29 (unter Vermittlung von Kapillarkräften) Duftmittel aus dem Duftmitteltank 17 angesaugt. Wird anschließend das Volumen der Pumpkammer 30 verkleinert, so wird ein Teil des in der Pumpkammer 30 befindlichen Duftmittels als Tröpfchenstrahl 24 über die Duftmittelauslassöffnung 27 ausgestoßen.

Wie in Fig. 4 angedeutet ist, kann an Stelle eines Piezoskristalls 28 auch ein Heizelement 31 verwendet werden. Das Heizelement 31 wird über eine Stoßstromquelle schlagartig mit einer (relativ auf das Flüssigkeitsvolumen gesehen) hohen Stromstärke beaufschlagt. Dadurch werden Teile des sich in der Pumpkammer 30 befindlichen Duftmittels so stark erhitzt, dass es zu einer Bildung von kleinen Dampfblasen kommt. Diese Dampfblasen "verkleinern" das Volumen der Pumpkammer 30, so dass Duftmittel aus der Duftmittelaustragsöffnung 27 ausgegeben wird.

## Patentansprüche

1. Beduftungseinrichtung (1) mit einer austauschbaren Duftmittelvorratsvorrichtung und mit einer Aktuatoreinrichtung (23), wobei die Duftmittelvorratsvorrichtung (4, 5) wenigstens eine Duftmittelbehältereinrichtung (17), wenigstens eine Duftmittelaustragseinrichtung (19, 31) und wenigstens eine Koppelungseinrichtung (22) aufweist zur Ankopplung an wenigstens eine Aktuatoreinrichtung (28, 31), wobei die Duftmittelbehältereinrichtung (17) keimdicht ausgeführt ist, **dadurch gekennzeichnet, dass** ein Verrastmittel (9, 10) zur Ver₋ rastung der Duftmittelvorrotsvorrichtung in einem Aufnahmebereich (2,3) für die Duftmittelvorratsvorrichtung (4,5) vorgesehen ist, wobei die Duftmittelvorratsvorrichtung eine Führungsnut (9), einen vorspringenden Stift und/oder ein Federmittel für ein sogenanntes Push-Push-System aufweist. rastung der Duftmittelvorrotsvorrichtung in einem Aufnahmebereich (2,3) für die Duftmittelvorratsvorrichtung (4,5) vorgesehen ist, wobei

2. Beduftungsvorrichtung (1) nach Anspruch 1, **gekennzeichnet durch** zumindest ein Informationsspeichermittel (15), welches insbesondere als elektronisches Informationsspeichermittel (15) ausgebildet ist.

3. Beduftungsvorrichtung (1) nach Anspruch 1 oder 2, **dadurch gekennzeichnet, dass** die Koppelungseinrichtung (22) zumindest teilweise als elektrische Koppelungseinrichtung (22) und/oder zumindest teilweise als Wärmekoppelungseinrichtung ausgeführt ist.

4. Beduftungsvorrichtung (1) nach einem der vorangehenden Ansprüche, **dadurch gekennzeichnet, dass** die Duftmittelvorratsvorrichtung (4, 5) insbesondere die Duftmittelbehältereinrichtung (17) und/oder die Duftmittelaustragseinrichtung (19, 31) zumindest teilweise wieder befüllbar und/oder zumindest teilweise rezyklierbar ausgeführt ist.

5. Beduftungsvorrichtung (1) nach einem der vorangehenden Ansprüche, **dadurch gekennzeichnet, dass** die Duftmittelaustragseinrichtung (19, 31) eine Zerstäubereinrichtung, eine piezoelektrische Einrichtung (28) und/oder eine Temperaturerhöhungseinrichtung (31) aufweist.

6. Beduftungsvorrichtung (1) nach einem der vorangehenden Ansprüche, **gekennzeichnet durch** wenigstens eine Tropfenauffangeinrichtung (26).

7. Beduftungsvorrichtung (1) nach einem der vorhergehenden Ansprüche, **gekennzeichnet durch** wenigstens ein Informationsübertragungsmittel (15), wobei das Informationsübertragungsmittel (15) bevorzugt als elektronisches Informationsübertragungsmittel (15) ausgebildet ist.

8. Beduftungsvorrichtung (1) nach einem der vorhergehenden Ansprüche, **gekennzeichnet durch** wenigstens eine Luftbeeinflussungseinrichtung, insbesondere wenigstens eine Luftfördereinrichtung (35), wenigstens eine Lufttempetaturänderungseinrichtung und/oder wenigstens eine Luftverwirbelungseinrichtung.

9. Beduftungsvorrichtung (1) nach einem der vorhergehenden Ansprüche **dadurch gekennzeichnet, dass** die Aktuatorvorrichtung zumindest teilweise als elektrische Koppelungseinrichtung (23), zumindest teilweise als Wärmekoppelungseinrichtung und/oder zumindest teilweise als Stoßstromeinrichtung ausgebildet ist.

10. Beduftungsvorrichtung (1) nach einem der vorhergehenden Ansprüche, **gekennzeichnet durch** eine Mehrzahl von Aufnahmeräumen (2, 3) zur Aufnahme von Duftmittelvorratsvorrichtungen (4, 5).

## Claims

1. A scenting device (1), comprising a replaceable odorant storage unit and an actuator device (23), the odorant storage unit (4, 5) comprising at least one odorant contained device (17), at least one odorant discharge device (19, 31) and at least one coupling device (22) for coupling to at least one actuator device (28, 31), the odorant contained device (17) having a germ-proof design, **characterized in that** a latching element (9, 10) is provided for the latching engagement of the odorant storage unit in a receiving legion (2, 3) for the odorant storage unit (4, 5), wherein the odorant storage unit comprises a guide groove (9), a protruding pin and/or a spring element for what is known as a push-push system.

2. The scenting device (1) according to claim 1, **characterized by** at least one Information storage element (15), which is deigned in particular as an electronic Information storage element (15).

3. The scenting device (1) according to claim 1 or 2, **characterized in that** the coupling device (22) is designed at least in part as an electric coupling device (22) and/or at least in part as a thermal coupling device.

4. A scenting device (1) according to any one of the preceding claims, **characterized in that** the odorant storage unit (4, 5), and in particular the odorant container device (17) and/or the odorant discharge devise (19, 31), are designed to be at least partially refillable and/or at least partially recyclable.

5. A scenting device (1) according to any one of the preceding claims, **characterized in that** the odorant discharge device (19, 31) comprises an atomizer device, a piezoelectric device (28) and/or a temperature increase device (31).

6. A scenting device (1) according to any one of the preceding claims, **characterized by** at least one drop collection device (26).

7. A scenting device (1) according to any one of the preceding claims, **characterized by** at least once Information transmission element (15), therein the Information transmission element (15) is preferably designed as an electronic Information transmission element (15).

8. A scenting device (1) according to any one of the preceding claims, **characterized by** at least one air influencing device, in particular at least one air supply device (35), at least one air temperature change device and/or at least one air swirling device.

9. A scenting device (1) according to any one of the preceding claims, **characterized in that** the actuator unit is designed at least partially as an electric coupling device (23), at least partially as a thermal coupling device and/or at least partially as a surge current device.

10. A scenting device (1) according to any one of the preceding claims, **characterized by** a plurality of receiving chambers (2, 3) for receiving odorant storage units (4, 5).

## Revendications

1. Dispositif (1) servant à parfumer, comprenant un dispositif à réserve de parfum, remplaçable, et un dispositif actionner (23), où le dispositif à réserve de parfum (4, 5) présente au moins un dispositif avec réservoir de parfum (17), au moins un dispositif de diffusion de parfum (19, 31) et au moins un dispositif de couplage (22) servant au couplage à au moins un dispositif actionner (28, 31), où le dispositif avec réservoir de parfum (17) est réalisé en étant étanche aux bactéries,
**caractérisé en ce qu'**il est prévu un moyen de verrouillage (9, 10) servant au verrouillage du dispositif à réserve de parfum, dans une zone de logement (2, 3) pour le dispositif à réserve de parfum (4, 5), où le dispositif à réserve de parfum présente une rainure de guidage (9), un ergot taillant et/ou un moyen formant ressort pour un système de poussoir à double effet dit push-push.

2. Dispositif (1) servant à parfumer selon la revendication 1, **caractérisé par** au moins un moyen de mémoire d'informations (15) qui est conçu en particulier comme un moyen de mémoire d'informations (15) électronique.

3. Dispositif (1) servant à parfumer selon la revendication 1 ou 2, **caractérisé en ce que** le dispositif de couplage (22) est réalisé au moins partiellement comme un dispositif de couplage électrique (22) et/ou au moins partiellement comme un dispositif de couplage fournissant de la chaleur.

4. Dispositif (1) servant à parfumer selon l'une quelconque des revendications précédentes, **caractérisé en ce que** le dispositif à réserve de parfum (4, 5), en particulier le dispositif avec réservoir de parfum (17) et/ou le dispositif de diffusion de parfum (19, 31), est réalisé en étant au moins partiellement rechargeable et/ou au moins partiellement recyclable.

5. Dispositif (1) servant à parfumer selon l'une quelconque des revendications précédentes, **caractérisé en ce que** le dispositif de diffusion de parfum (19, 31) présente un dispositif pulvérisateur, un dispositif piézoélectrique (28) et/ou un dispositif d'augmentation de la température (31).

6. Dispositif (1) servant à parfumer selon l'une quelconque des revendication précédentes, **caractérisé par** au moins un dispositif collecteur de gouttes (26).

7. Dispositif (1) servant à parfumer selon l'une quelconque des revendications précédentes, **caractérisé par** au moins un moyen de transmission d'informations (15), où le moyen de transmission d'informations (15) est conçu, de préférence, comme un moyen de transmission d'informations (15) électronique.

8. Dispositif (1) servant à parfumer selon l'une quelconque des revendications précédentes, **caractérisé par** au moins und dispositif influençant l'air, en particulier au moins un dispositif de transport de l'air (35), au moins un dispositif de modification de la température de l'air et/ou au moins un dispositif de tourbillonnement de l'air.

9. Dispositif (1) servant à parfumer selon l'une quelconque des revendications précédentes, **caractérisé en ce que** le dispositif actionner est conçu au moins partiellement comme un dispositif de couplage électrique (23), au moins partiellement comme un dispositif de couplage fournissant de la chaleur et/ou au moins partiellement comme un dispositif à courant transitoire.

10. Dispositif (1) servant à parfumer selon l'une quelconque des revendications précédentes, **caractérisé par** une pluralité d'espaces de logement (2, 3) servant au logement de dispositifs à réserve de parfum (4, 5).
